# EUROPEAN PATENT SPECIFICATION

(11) **EP 4 654 331 B1**
(45) Date of publication and mention of the grant of the patent: **13.05.2026**
(21) Application number: 24305822.9
(22) Date of filing: 24.05.2024
(51) Int. Cl.: H01M 10/613, H01M 10/647, H01M 10/653, H01M 10/658, H01M 50/209, H01M 50/291, H01M 50/293, H01M 10/6555, H01M 50/224

(54) **BATTERY MODULE WITH THERMAL INSULATION SPACERS**
BATTERIEMODUL MIT WÄRMEDÄMMUNGSABSTANDSHALTERN
MODULE DE BATTERIE AVEC ESPACEURS D'ISOLATION THERMIQUE

(43) Date of publication of application: 26.11.2025
(73) Proprietor: Automotive Cells Company SE, 33520 Bruges (FR)
(72) Inventor: VILLARDI, Caroline, 33520 BRUGES (FR)
(74) Representative: Alatis

(56) References cited:
- WO-A1-2020/064752
- WO-A1-2023/067071
- WO-A2-2023/279096

## Description

### TECHNICAL FIELD OF THE INVENTION

The present invention relates to a battery module and, more specifically to provisions taken to address thermal propagation risks in a battery module.

### BACKGROUND ART

Battery modules comprising two opposite end plates and several parallel rows of cells separated by one or more partition plates perpendicular to the end plates are well known in the art, as disclosed e.g. in CN111584978A or CN113437403A. Each row of cells usually comprises a repeating series of alternating prismatic battery cells and thermal insulation spacers. The thermal insulation spacers include intermediate insulation spacers each located between two adjacent prismatic battery cells of the series, in direct contact with the two adjacent prismatic battery cells, and two opposite end insulation spacers, each at a respective end of the series, in contact with an end battery cell of the series and with one of the end plates.

Under normal operating conditions, there is an advantage in having a high thermal conductivity between the end battery cell and the end plate, so that heat can flow through the end plate rather than towards the next battery cell of the row. However, if the end battery cell overheats, too high a conductivity increases the risk of heat being transferred through the end plate to the end battery cell of the next row.

Similarly, depending on the design of the battery module, it may be advantageous to promote heat flow between the cells of a row at low temperature, while avoiding heat propagation from an overheated cell to the neighbouring cells of the row.

WO2023279096 discloses methods and systems to manage thermal runaway issues in energy storage systems. Exemplary embodiments include methods and systems having a compressible thermal barrier. The compressible thermal barrier is tailored in size (e.g., thickness, volume, etc.) to prevent thermal propagation between adjacent cells, modules and/or packs when a portion of an energy source has experienced a thermal event. The methods and systems mitigate thermal propagation such that a cell adjacent to a compromised cell (e.g., actively combusting cell) does not experience thermal runaway as it is shielded from dissipating heat and does not surpass a critical temperature. A battery module or pack with one or more battery cells and the compressible thermal barrier placed between adjacent cells are also disclosed.

WO2023067071 discloses an article for covering battery components in an automotive prime-mover battery pack, the article comprising a top cover having an outer major surface and an inner major surface that is shaped to conform to the battery components, wherein the top cover is prepared by extrusion of a composition comprising a polyolefin and glass fibers to obtain a sheet and subsequent thermoforming of the sheet and wherein the article is configured to form an outer char coating when exposed to flame.

WO2020064752 discloses a glass fiber filled flame retardant polypropylene composition comprising (A) a polypropylene-based polymer, (B) a first flame retardant in an amount of 15 to 40 wt% of the total composition, wherein the first flame retardant is in the form of particles comprising ammonium polyphosphate and at least one phosphate selected from the group consisting of melamine phosphate, melamine polyphosphate, melamine pyrophosphate, piperazine phosphate, piperazine polyphosphate, piperazine pyrophosphate, 2-methylpiperazine monophosphate, tricresyl phosphate, alkyl phosphates, haloalkyl phosphates, tetraphenyl pyrophosphate, poly(2-hydroxy propylene spirocyclic pentaerythritol bisphosphate) and poly(2,2-dimethylpropylene spirocyclic pentaerythritol bisphosphonate), (C) a second flame retardant in an amount of 0.1 to 15 wt% of the total composition, wherein the second flame retardant comprises an aromatic phosphate ester and (D) glass fibers in an amount of 5 to 40 wt% of the total composition.

### SUMMARY OF THE INVENTION

The invention aims to provide a battery module which conciliate these contradictory requirements.

According to the invention, there is provided a battery module comprising one or more rows of cells extending in a longitudinal direction of the battery module, each of the one or more rows of cells comprising a series of prismatic battery cells and thermal insulation spacers repeated alternately along the longitudinal direction. At least one of the thermal insulation spacers is made of a state transition material, which exhibits an initial thermal conductivity higher than an initial thermal conductivity threshold at temperatures below 200°C and, when exposed to temperatures higher than a transition temperature greater than 220°C and less than 320°C, undergoes an irreversible transformation which results in a post-transformation thermal conductivity lower than a post-transformation thermal conductivity threshold that is less than the initial thermal conductivity threshold minus 0.5 Wm⁻¹K⁻¹, and less than 0.28 Wm⁻¹K⁻¹ .

The term "material" as used herein refers to both homogeneous and heterogeneous materials, compositions or structures.

As long as the temperature remains below the transition temperature, no transformation of the state transition material of the insulation spacer takes place, which means that the battery module remains in an operational state. Exceeding the transition temperature means that a battery cell has overheated, and that substantial maintenance or replacement of the battery module is required. In this context, an irreversible transformation of the thermal insulation plate is acceptable.

The state transition material should be chosen such that the transition temperature corresponds to an overheating of the prismatic battery cells. In various embodiments:
- the initial thermal conductivity threshold is higher than 0.30 Wm⁻¹K⁻¹, and preferably higher than 0.35 Wm⁻¹K⁻¹ ; and/or
- the post-transformation thermal conductivity threshold is less than or equal to 0.25 Wm⁻¹K⁻¹ ; and/or
- the post-transformation thermal conductivity threshold that is less than the initial thermal conductivity threshold minus 0.8 Wm⁻¹K⁻¹
- the transition temperature is greater than 280°C; and/or
- the transition temperature is less than 300°C; and/or
- the initial thermal conductivity is higher than the initial thermal conductivity threshold at temperatures below 220°C.

In one embodiment, the transformation comprises charring, which results in an outer char coating or a depth charring of said state transition material. The production of char decreases the thermal conductivity of the state transition material and provides a protection against flames.

The state transition material may comprise various components to produce an outer char coating or a depth charring of the material when exposed to high heat. It may, in particular, comprise an organic component, in particular a polyolefin, that decomposes to a char consisting primarily of carbon when exposed to heat. Preferably, the state transition material comprises an acid source, which promotes the formation of the char. Preferably the state transition material comprises an intumescence promoter, which expands the char, to generate an expanded, insulating, cellular structure after transformation. The intumescence promoter can be a compound that produces non-flammable gases when undergoing thermal decomposition at or above the transition temperature. The expansion of the char and formation of a cellular structure enhances the insulating properties of the state transition material.

In particular, the state transition material may consist of, or comprise one or more of:
- a composite material which contains a polyolefin and glass or mineral fibres; and/or
- a composite material which contains at least 60 wt. % of polypropylene and at least 20 wt. % of long glass fibres and 0.01 to 10 wt. % of a halogen-free flame retardant; and/or
- a thermoplastic polymer composition comprising a flame retardant, preferably an intumescent flame retardant.

In particular, the state transition material can be any one of the thermoplastic polymer compositions disclosed in WO23067071 that meets the thermal conduction requirement set out above.

In a preferred embodiment, the state transition material exhibits a V₀ rating for a material thickness of 1 mm when tested in accordance with UL94.

If required, the intermediate insulation spacers can be made of said state transition material.

In a preferred embodiment, the battery module comprises two parallel end plates perpendicular to the longitudinal direction of the battery module. The thermal insulation spacers include intermediate insulation spacers each located between and in contact with two adjacent prismatic battery cells of the series, and two opposite end insulation spacers each at a respective longitudinal end of the series. Each of the end insulation spacers is in contact with a respective end prismatic battery cell of the series and a respective one of the two end plates. At least one of the two end insulation spacers is made of said state transition material. The intermediate insulation spacers may have a thermal conductivity that is significantly lower than the end insulation spacers, e.g. less than ¼ of the thermal conductivity of the end insulation spacers, in the range between ambient temperature and 450°C. This ensures that in all circumstances, including overheating of the end battery cell, heat will not predominantly flow from the end battery cell to the neighbouring cells of the row. In one embodiment, the intermediate insulation spacers are made of an insulating material exhibiting a thermal conductivity which:
- is less than 0.04 Wm⁻¹K⁻¹ at temperatures below 350°C; and/or
- is less than 0.05 Wm⁻¹K⁻¹ at temperatures below 450°C; and/or
- increases with the temperature in a temperature range from 100°C to 400°C.

In one embodiment, each of the end plates is made of a heat conductive material with a thermal conductivity higher than 100 Wm⁻¹K⁻¹, preferably an aluminium alloy.

In one embodiment, the one or more rows of cells comprises at least a first and a second rows of cells . Preferably, the battery module comprises a common end plate insulation spacer comprising the end insulation spacer of the first row of cells and the end insulation spacer of the second row of cells. In this case in particular, the use of the state transition material for the end plate insulation spacer is advantageous, since it prevents thermal conduction through the insulation spacer itself.

In one embodiment, the first and second rows of cells are positioned side by side on opposite sides of a partition plate which extends from one of the two end plates to the other. In one embodiment, the common end plate insulation spacer is provided with a slot through which a tongue of the partition plate extends. Preferably, the partition plate is made of an aluminium alloy with a thermal conductivity higher than 100 Wm⁻¹K⁻¹ . Preferably, each of the prismatic battery cells has a contact area with the partition plate, which is less than ¼ of a contact area between the end battery cell and the end insulation spacer. This ensures that the heat flow from one row to the next through the partition plate will be limited.

In one embodiment, the end plate has a thermal conductivity higher than the partition plate.

In one embodiment, the least one of the thermal insulation spacers made of said state transition material has a thickness of more than 0,7mm and less than 2,5 mm. Preferably, the thickness is between 0,8mm and 1,2mm, e.g. 1mm.

The above-mentioned embodiments can be combined.

### BRIEF DESCRIPTION OF THE FIGURES

Other advantages and features of the invention will then become more clearly apparent from the following description of a specific embodiment of the invention given as non-restrictive example only and represented in the accompanying drawings in which:
- Figure 1 is a schematic longitudinal sectional view of a battery module according to one embodiment of the invention, in a longitudinal sectional plane I-I shown in Figure 3;
- Figure 2 is a schematic cross-sectional view of the battery module of Figure 1, in a longitudinal plane II-II shown in Figure 1;
- Figure 3 is schematic longitudinal sectional view of a battery module according to one embodiment of the invention, in a longitudinal sectional plane III-III shown in Figure 1;
- Figure 4 is a diagram illustrating the thermal conductivity of a state transition material used in the embodiment of figure 1, as a function of the temperature.

Corresponding reference numerals refer to the same or corresponding parts in each of the figures.

### DETAILED DESCRIPTION OF A PREFERRED EMBODIMENT

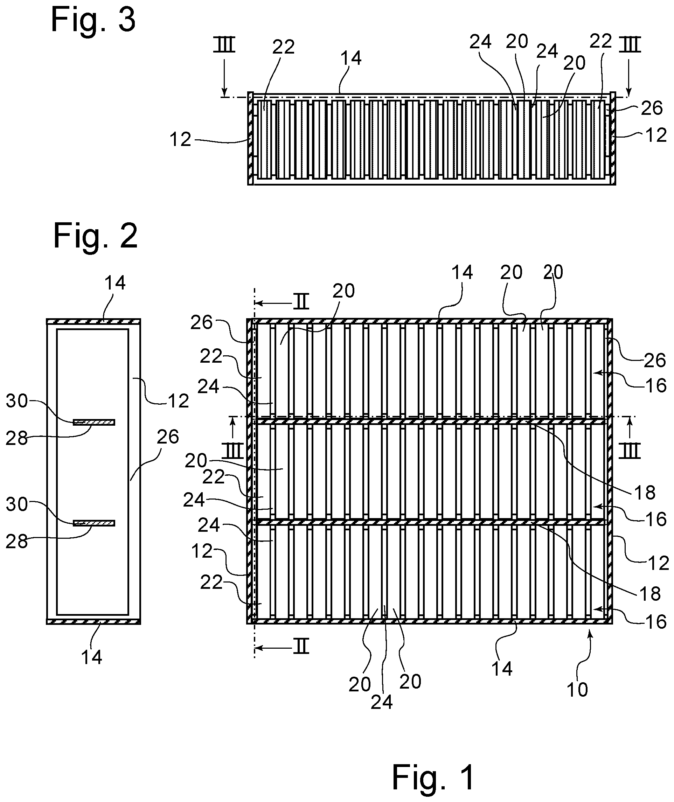

With reference to Figures **1** to **3****,** a battery module **10** comprises two parallel end plates **12,** two parallel side plates **14** extending along a longitudinal direction **100** of the battery module **10** perpendicular to the end plates **12,** three parallel rows **16** of cells which are positioned side by side along the longitudinal direction **100,** between the two side plates **14,** and two partition plates **18** each extending parallel to the side plates **14** between two of the rows **16** of cells. The partition plates **18** are made of an aluminium alloy with a thermal conductivity higher than 100 Wm⁻¹K⁻¹. The end plates **14** and side plates **16** are also made of an aluminium alloy with a thermal conductivity higher than 100 Wm⁻¹K⁻¹, which can have a thermal conductivity equal to, or preferably higher than, the partition plates.

Each row **16** of cells comprises a series of prismatic battery cells **20, 22** and thermal insulation spacers **24, 26,** repeated alternately along the reference axis. The thermal insulation spacers **24, 26** include intermediate insulation spacers **24,** each located between two adjacent prismatic battery cells **20, 22** of the row **16,** in contact with the two adjacent prismatic battery cells **20, 22,** and two opposite end insulation spacers **26,** each at a respective end of the row **16,** each of the end insulation spacers **26** being in contact with an end prismatic battery cell **22** of the row **16** and with a respective one of the end plates **12.** The end insulation spacers **26** for each row of cells can be separate. Alternatively, and as shown in the figures, the three end insulation spacers at each longitudinal end of the battery module constitute a single common insulation spacer **26,** which can be provided with slots **28** through which tongues **30** of the partition plates **18** extend.

The prismatic battery cells **20, 22** preferably all have identical dimensions, as do the intermediate insulation spacers **24.** Each of the prismatic battery cells **20, 22** has a contact area with each adjacent partition plate **18,** which is less than ¼ of its contact area with each adjacent insulation spacers **24, 26.** In particular, each of the prismatic battery cells **20, 22** has a contact area with each adjacent partition plate **18,** which is less than ¼ of the contact area between the end battery cell **22** and the end insulation spacer **26.** As an example, the contact area of the end cell **22** with the end insulation spacer **26** is more than 16000 mm², while the contact area of the end cell **22** with the adjacent partition plate **18** is less than 4000 mm².

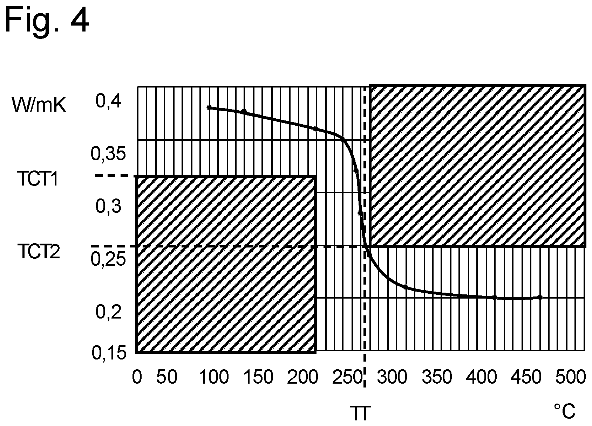

In order to both promote heat circulation in normal conditions and thermal insulation when overheating is experienced, at least one of the thermal insulation spacers **24,** 26, in particular at least one of the end insulation spacers **26,** is made of a state transition material, which exhibits an initial thermal conductivity higher than an initial thermal conductivity threshold **TCT1** of 0.30 Wm⁻¹K⁻¹ at temperatures below 200°C, and preferably at temperatures below 250°C, and which, when exposed to temperatures higher than a transition temperature **TT** greater than 250°C and less than 320°C, undergoes an irreversible transformation which results in a post-transformation thermal conductivity lower than a post-transformation thermal conductivity threshold **TCT2** of 0.25 Wm⁻¹K⁻¹. The transition temperature is preferably greater than 280°C and/or less than 300°C. Figure 4 illustrates the thermal conductivity of the state transition material as a function of the temperature reached.

The transition comprises charring, which results in an outer char coating or a depth charring of said state transition material. The state transition material can be a composite material which contains a polyolefin and glass or mineral fibres, a composite material which contains at least 60 wt. % of polypropylene and at least 20 wt. % of long glass fibres and 0.01 to 10 wt. % of a halogen-free flame retardant; a thermoplastic polymer composition comprising a flame retardant, preferably an intumescent flame retardant. The state transition material should preferably exhibit a V₀ rating for a material thickness of 1 mm when tested in accordance with UL94.

In an embodiment in which the aim is to prevent thermal propagation in case of overheating of one of the end prismatic battery cells **22,** the intermediate insulation spacers **24** are made of an insulating material exhibiting a thermal conductivity which:
- is less than 0.04 Wm⁻¹K⁻¹ at temperatures below 350°C; and/or
- is less than 0.05 Wm⁻¹K⁻¹ at temperatures below 450°C; and/or
- increases with the temperature in a temperature range from 100°C to 400°C.

At low temperatures, i.e. below the transition temperature, the high thermal conductivity of the state transition material of the end insulation spacers **26** allows thermal conduction from the end battery cells **22** to the end plate **12,** to cool the end battery cells **22.** In an instance of overheating of one of the end battery cells **22,** the end insulation spacer **26** reaches the transition temperature, at which it undergoes the irreversible transformation which results in a post-transformation thermal conductivity lower than 0.25 Wm⁻¹K⁻¹. As a result, heat transfer from the overheating end battery cell **22** to the adjacent end battery cell(s) **22** of the adjacent row(s) **16** through the end insulation spacer **22** and the end plate **12** is limited, which delays the propagation of heat and the temperature rise of the adjacent end battery cell(s) **22.** The small contact area of the end battery cells **22** with the adjacent partition(s) **18** ensures that the amount of heat that passes through the partition(s) **18** will be limited. The low thermal conductivity of the intermediate insulation spacers **24** ensures that the amount of heat that passes to the next battery cell **20** in the same row **16** is also limited. Hence, the risks of thermal propagation or runaway are limited.

In other embodiments, the partition plates **18** can be omitted or replaced with individual partitions plates, each sandwiched between two prismatic battery cells **20, 22** of two different rows **16.** The intermediate insulation spacers **24** can extend transversally across the rows **16** of battery cells, in a manner similar to the end insulation spacers **26.** The number of rows **16** may vary.

## Claims

1. A battery module (10) comprising
- two parallel end plates (12) and two parallel side plates (14) extending along a longitudinal direction (100) of the battery module (10) perpendicular to the end plates (12), wherein the end plates (14) and side plates (16) are made of an aluminium alloy with a thermal conductivity higher than 100 Wm⁻¹K⁻¹,
- rows of cells (16) extending in the longitudinal direction (100) of the battery module (10), each of the rows of cells (16) comprising a series of prismatic battery cells (20, 22) and thermal insulation spacers (24, 26) repeated alternately along the longitudinal direction (100),
- a partition plate (18) between each pair of adjacent rows among the rows of cells (16), each partition plate (18) extending parallel to the side plates (14), wherein the partition plates (18) are made of an aluminium alloy with a thermal conductivity higher than 100 Wm⁻¹K⁻¹
**characterised in that** at least one of the thermal insulation spacers (24, 26) is made of a state transition material, which exhibits an initial thermal conductivity higher than an initial thermal conductivity threshold (TCT1) at temperatures below 200°C and, when exposed to temperatures higher than a transition temperature (TT) greater than 220°C and less than 320°C, undergoes an irreversible transformation which results in a post-transformation thermal conductivity lower than a post-transformation thermal conductivity threshold (TCT2) that is less than the initial thermal conductivity threshold (TCT1) minus 0.5 Wm⁻¹K⁻¹, and less than 0.28 Wm⁻¹K⁻¹;
and **in that** the thermal insulation spacers (24, 26) include intermediate insulation spacers (24) each located between and in contact with two adjacent prismatic battery cells (20, 22) of the series, and two opposite end insulation spacers (26) each at a respective longitudinal end of the series, each of the end insulation spacers (26) being in contact with a respective end prismatic battery cell (22) of the series and a respective one of the two end plates (12), wherein at least one of the two end insulation spacers (26) is made of said state transition material.

2. The battery module (10) of claim 1, wherein
- the initial thermal conductivity threshold (TCT1) is higher than 0.30 Wm⁻¹K⁻¹, and preferably higher than 0.35 Wm⁻¹K⁻¹ ; and/or
- the post-transformation thermal conductivity threshold (TCT2) is less than or equal to 0.25 Wm⁻¹K⁻¹ ; and/or
- the post-transformation thermal conductivity threshold (TCT2) that is less than the initial thermal conductivity threshold minus 0.8 Wm⁻¹K⁻¹
- the transition temperature (TT) is greater than 280°C; and/or
- the transition temperature (TT) is less than 300°C.

3. The battery module (10) of any one of the preceding claims, wherein the initial thermal conductivity is higher than the initial thermal conductivity threshold (TCT1) at temperatures below 220°C.

4. The battery module (10) of any one of the preceding claims, wherein the transformation comprises charring, which results in an outer char coating or a depth charring of said state transition material.

5. The battery module (10) of any one of the preceding claims, wherein the state transition material consists of, or comprises one or more of:
- a composite material which contains a polyolefin and glass or mineral fibres; and/or
- a composite material which contains at least 60 wt. % of polypropylene and at least 20 wt. % of long glass fibres and 0.01 to 10 wt. % of a halogen-free flame retardant; and/or
- a thermoplastic polymer composition comprising a flame retardant, preferably an intumescent flame retardant.

6. The battery module (10) of any one of the preceding claims, wherein the state transition material exhibits a V₀ rating for a material thickness of 1 mm when tested in accordance with UL94.

7. The battery module (10) of any one of the preceding claims, wherein the thermal conductivity of the end plates (12) and side plates (14) is higher than the thermal conductivity of the partition plates.

8. The battery module (10) of any one of the preceding claims, wherein the intermediate insulation spacers (24) are made of an insulating material exhibiting a thermal conductivity which:
- is less than 0.04 Wm⁻¹K⁻¹ at temperatures below 350°C; and/or
- is less than 0.05 Wm⁻¹K⁻¹ at temperatures below 450°C; and/or
- increases with the temperature in a temperature range from 100°C to 400°C.

9. The battery module (10) of any one of the preceding claims, wherein each of the end plates (12) is made of a heat conductive material with a thermal conductivity higher than 100 Wm⁻¹K⁻¹, preferably an aluminium alloy.

10. The battery module (10) of any one of the preceding claims, wherein the one or more rows of cells (16) include at least a first and a second rows of cells (16).

11. The battery module (10) of claim 10, comprising a common end plate insulation spacer comprising the end insulation spacer (26) of the first row of cells (16) and the end insulation spacer (26) of the second row of cells.

12. The battery module (10) of any one of claims 10 toll, wherein the first and second rows of cells (16) are positioned side by side on opposite sides of a partition plate (18) which extends from one of the two end plates (12) to the other.

13. The battery module (10) of claim 12 in combination with claim 11, wherein the common end plate insulation spacer (26) is provided with a slot (28) through which a tongue (30) of the partition plate (18) extends.

14. The battery module (10) of any one of claims 12 to 13, wherein
- the partition plate (18) is made of an aluminium alloy with a thermal conductivity higher than 100 Wm⁻¹K⁻¹, and/or
- each of the prismatic battery cells (20, 22) has a contact area with the partition plate (18), which is less than ¼ of a contact area between the end battery cell (22) and the end insulation spacer (26).

15. The battery module (10) of any one of the preceding claims, wherein the least one of the thermal insulation spacers (24, 26) made of said state transition material has a thickness of more than 0,7mm and less than 2,5 mm.

## Patentansprüche

1. Batteriemodul (10), umfassend
- zwei parallele Endplatten (12) und zwei parallele Seitenplatten (14), die sich entlang einer Längsrichtung (100) des Batteriemoduls (10) senkrecht zu den Endplatten (12) erstrecken, wobei die Endplatten (14) und die Seitenplatten (16) aus einer Aluminiumlegierung mit einer Wärmeleitfähigkeit höher als 100 Wm⁻¹K⁻¹ hergestellt sind,
- Zellreihen (16), die sich in der Längsrichtung (100) des Batteriemoduls (10) erstrecken, wobei jede der Zellreihen (16) eine Reihe von prismatischen Batteriezellen (20, 22) und wärmeisolierenden Abstandshaltern (24, 26) umfasst, die sich abwechselnd entlang der Längsrichtung (100) wiederholen,
- eine Trennplatte (18) zwischen jedem Paar benachbarter Reihen unter den Zellreihen (16), wobei sich jede Trennplatte (18) parallel zu den Seitenplatten (14) erstreckt, wobei die Trennplatten (18) aus einer Aluminiumlegierung mit einer Wärmeleitfähigkeit höher als 100 Wm⁻¹K⁻¹ hergestellt sind,
**dadurch gekennzeichnet, dass** mindestens einer der wärmeisolierenden Abstandshalter (24, 26) aus einem Zustandsübergangsmaterial hergestellt ist, welches eine anfängliche Wärmeleitfähigkeit höher als ein anfänglicher Wärmeleitfähigkeitsschwellenwert (TCT1) bei Temperaturen unter 200 °C aufweist und, wenn es Temperaturen ausgesetzt wird, die höher als eine Übergangstemperatur (TT) größer als 220 °C und kleiner als 320 °C sind, eine irreversible Transformation durchläuft, die zu einer Wärmeleitfähigkeit nach der Transformation führt, die niedriger ist als ein Wärmeleitfähigkeitsschwellenwert nach der Transformation (TCT2), der kleiner ist als der anfängliche Wärmeleitfähigkeitsschwellenwert (TCT1) minus 0,5 Wm⁻¹K⁻¹, und kleiner als 0,28 Wm⁻¹K⁻¹;
und dadurch, dass die wärmeisolierenden Abstandshalter (24, 26) Zwischenisolierungsabstandshalter (24), die jeweils zwischen zwei benachbarten prismatischen Batteriezellen (20, 22) der Reihe angeordnet und mit diesen in Kontakt sind, und zwei gegenüberliegende Endisolierungsabstandshalter (26) einschließen, die jeweils an einem jeweiligen Längsende der Reihe angeordnet sind, wobei jeder der Endisolierungsabstandshalter (26) mit einer jeweiligen prismatischen Endbatteriezelle (22) der Reihe und einer jeweiligen der beiden Endplatten (12) in Kontakt ist, wobei mindestens einer der beiden Endisolierungsabstandshalter (26) aus dem Zustandsübergangsmaterial hergestellt ist.

2. Batteriemodul (10) nach Anspruch 1, wobei:
- der anfängliche Wärmeleitfähigkeitsschwellenwert (TCT1) höher als 0,30 Wm⁻¹K⁻¹ ist, und vorzugsweise höher als 0,35 Wm⁻¹K⁻¹ ist; und/oder
- der Wärmeleitfähigkeitsschwellenwert nach der Transformation (TCT2) kleiner oder gleich 0,25 Wm⁻¹K⁻¹ ist; und/oder
- der Wärmeleitfähigkeitsschwellenwert nach der Transformation (TCT2), der geringer ist als der anfängliche Wärmeleitfähigkeitsschwellenwert minus 0,8 Wm⁻¹ K⁻¹
- die Übergangstemperatur (TT) größer als 280 °C ist; und/oder
- die Übergangstemperatur (TT) geringer als 300 °C ist.

3. Batteriemodul (10) nach einem der vorstehenden Ansprüche, wobei die anfängliche Wärmeleitfähigkeit höher ist als der anfängliche Wärmeleitfähigkeitsschwellenwert (TCT1) bei Temperaturen unter 220 °C.

4. Batteriemodul (10) nach einem der vorstehenden Ansprüche, wobei die Transformation eine Verkohlung umfasst, die zu einer äußeren Kohlebeschichtung oder einer Tiefenverkohlung des Zustandsübergangsmaterials führt.

5. Batteriemodul (10) nach einem der vorstehenden Ansprüche, wobei das Zustandsübergangsmaterial aus einem oder mehreren der Folgenden besteht oder diese umfasst:
- ein Verbundwerkstoff, der ein Polyolefin und Glas- oder Mineralfasern enthält; und/oder
- ein Verbundwerkstoff, der mindestens 60 Gew.-% Polypropylen und mindestens 20 Gew.-% lange Glasfasern und 0,01 bis 10 Gew.-% eines halogenfreien Flammschutzmittels enthält; und/oder
- eine thermoplastische Polymerzusammensetzung, umfassend ein Flammschutzmittel, vorzugsweise ein intumeszierendes Flammschutzmittel.

6. Batteriemodul (10) nach einem der vorstehenden Ansprüche, wobei das Zustandsübergangsmaterial eine V₀-Bewertung für eine Materialdicke von 1 mm aufweist, wenn es gemäß UL94 getestet wird.

7. Batteriemodul (10) nach einem der vorstehenden Ansprüche, wobei die Wärmeleitfähigkeit der Endplatten (12) und der Seitenplatten (14) höher ist als die Wärmeleitfähigkeit der Trennplatten.

8. Batteriemodul (10) nach einem der vorstehenden Ansprüche, wobei die Zwischenisolierungsabstandshalter (24) aus einem isolierenden Material hergestellt sind, das eine Wärmeleitfähigkeit aufweist, die:
- bei Temperaturen unter 350 °C geringer als 0,04 Wm⁻¹K⁻¹ ist; und/oder
- bei Temperaturen unter 450 °C geringer als 0,05 Wm⁻¹K⁻¹ ist; und/oder
- mit der Temperatur in einem Temperaturbereich von 100 °C bis 400 °C ansteigt.

9. Batteriemodul (10) nach einem der vorstehenden Ansprüche, wobei jede der Endplatten (12) aus einem wärmeleitfähigen Material mit einer Wärmeleitfähigkeit höher als 100 Wm⁻¹K⁻¹ hergestellt ist, vorzugsweise einer Aluminiumlegierung.

10. Batteriemodul (10) nach einem der vorstehenden Ansprüche, wobei die eine oder die mehreren Zellenreihen (16) mindestens eine erste und eine zweite Zellenreihe (16) einschließen.

11. Batteriemodul (10) nach Anspruch 10, umfassend einen gemeinsamen Endplattenisolierungsabstandshalter, der den Endisolierungsabstandshalter (26) der ersten Zellenreihe (16) und den Endisolierungsabstandshalter (26) der zweiten Zellenreihe umfasst.

12. Batteriemodul (10) nach einem der Ansprüche 10 bis 11, wobei die erste und die zweite Zellenreihe (16) Seite an Seite auf gegenüberliegenden Seiten einer Trennplatte (18) positioniert sind, die sich von einer der zwei Endplatten (12) zu der anderen erstreckt.

13. Batteriemodul (10) nach Anspruch 12 in Kombination mit Anspruch 11, wobei der gemeinsame Endplattenisolierungsabstandshalter (26) mit einem Schlitz (28) bereitgestellt ist, durch den sich eine Zunge (30) der Trennplatte (18) erstreckt.

14. Batteriemodul (10) nach einem der Ansprüche 12 bis 13, wobei:
- die Trennplatte (18) aus einer Aluminiumlegierung mit einer Wärmeleitfähigkeit höher als 100 Wm⁻¹K⁻¹ hergestellt ist, und/oder
- jede der prismatischen Batteriezellen (20, 22) eine Kontaktfläche mit der Trennplatte (18) aufweist, die weniger als ¼ einer Kontaktfläche zwischen der Endbatteriezelle (22) und dem Endisolierungsabstandshalter (26) beträgt.

15. Batteriemodul (10) nach einem der vorstehenden Ansprüche, wobei der mindestens eine der aus dem Zustandsübergangsmaterial hergestellten wärmeisolierenden Abstandshalter (24, 26) eine Dicke von mehr als 0,7 mm und weniger als 2,5 mm aufweist.

## Revendications

1. Module de batterie (10) comprenant
- deux plaques d'extrémité (12) parallèles et deux plaques latérales (14) parallèles s'étendant le long d'une direction longitudinale (100) du module de batterie (10) perpendiculaire aux plaques d'extrémité (12), dans lequel les plaques d'extrémité (14) et les plaques latérales (16) sont constituées d'un alliage d'aluminium ayant une conductivité thermique supérieure à 100 Wm⁻¹K⁻¹,
- des rangées de cellules (16) s'étendant dans la direction longitudinale (100) du module de batterie (10), chacune des rangées de cellules (16) comprenant une série d'éléments de batterie prismatiques (20, 22) et d'espaceurs d'isolation thermique (24, 26) répétés alternativement le long de la direction longitudinale (100),
- une plaque de séparation (18) entre chaque paire de rangées adjacentes parmi les rangées de cellules (16), chaque plaque de séparation (18) s'étendant parallèlement aux plaques latérales (14), dans lequel les plaques de séparation (18) sont constituées d'un alliage d'aluminium ayant une conductivité thermique supérieure à 100 Wm⁻¹K⁻¹,
**caractérisé en ce qu'au** moins l'un des espaceurs d'isolation thermique (24, 26) est constitué d'un matériau de transition d'état, qui présente une conductivité thermique initiale supérieure à un seuil de conductivité thermique initial (TCT1) à des températures inférieures à 200 °C et, lorsqu'il est exposé à des températures supérieures à une température de transition (TT) supérieure à 220 °C et inférieure à 320 °C, subit une transformation irréversible qui se traduit par une conductivité thermique post-transformation inférieure à un seuil de conductivité thermique post-transformation (TCT2) qui est inférieur au seuil de conductivité thermique initial (TCT1) moins 0,5 Wm⁻¹K⁻¹, et inférieur à 0,28 Wm⁻¹K⁻¹ ;
et **en ce que** les espaceurs d'isolation thermique (24, 26) comportent des espaceurs d'isolation intermédiaires (24) situés chacun entre et en contact avec deux éléments de batterie prismatiques (20, 22) adjacents de la série, et deux espaceurs d'isolation d'extrémité (26) opposés chacun au niveau d'une extrémité longitudinale respective de la série, chacun des espaceurs d'isolation d'extrémité (26) étant en contact avec un élément de batterie prismatique d'extrémité (22) respectif de la série et une des deux des plaques d'extrémité (12) respective, dans lequel au moins l'un des deux espaceurs d'isolation d'extrémité (26) est constitué dudit matériau de transition d'état.

2. Module de batterie (10) selon la revendication 1, dans lequel
- le seuil de conductivité thermique initial (TCT1) est supérieur à 0,30 Wm⁻¹K⁻¹, et de préférence supérieur à 0,35 Wm⁻¹K⁻¹ ; et/ou
- le seuil de conductivité thermique post-transformation (TCT2) est inférieur ou égal à 0,25 Wm⁻¹K⁻¹ ; et/ou
- le seuil de conductivité thermique post-transformation (TCT2) qui est inférieur au seuil de conductivité thermique initial moins 0,8 Wm⁻¹K⁻¹ ;
- la température de transition (TT) est supérieure à 280 °C ; et/ou
- la température de transition (TT) est inférieure à 300 °C.

3. Module de batterie (10) selon l'une quelconque des revendications précédentes, dans lequel la conductivité thermique initiale est supérieure au seuil de conductivité thermique initial (TCT1) à des températures inférieures à 220 °C.

4. Module de batterie (10) selon l'une quelconque des revendications précédentes, dans lequel la transformation comprend une carbonisation, qui résulte en un revêtement de carbonisation externe ou une carbonisation en profondeur dudit matériau de transition d'état.

5. Module de batterie (10) selon l'une quelconque des revendications précédentes, dans lequel le matériau de transition d'état est constitué de, ou comprend un ou plusieurs parmi :
- un matériau composite contenant une polyoléfine et des fibres de verre ou minérales ; et/ou
- un matériau composite qui contient au moins 60 % en poids de polypropylène et au moins 20 % en poids de fibres de verre longues et de 0,01 à 10 % en poids d'un retardateur de flamme sans halogène ; et/ou
- une composition de polymère thermoplastique comprenant un retardateur de flamme, de préférence un retardateur de flamme intumescent.

6. Module de batterie (10) selon l'une quelconque des revendications précédentes, dans lequel le matériau de transition d'état présente un classement V₀ pour une épaisseur de matériau de 1 mm lorsqu'il est testé conformément à la norme UL94.

7. Module de batterie (10) selon l'une quelconque des revendications précédentes, dans lequel la conductivité thermique des plaques d'extrémité (12) et des plaques latérales (14) est supérieure à la conductivité thermique des plaques de séparation.

8. Module de batterie (10) selon l'une quelconque des revendications précédentes, dans lequel les espaceurs d'isolation intermédiaires (24) sont constitués d'un matériau isolant présentant une conductivité thermique qui :
- est inférieure à 0,04 Wm⁻¹K⁻¹ à des températures inférieures à 350 °C ; et/ou
- est inférieure à 0,05 Wm⁻¹K⁻¹ à des températures inférieures à 450 °C ; et/ou
- augmente avec la température dans une plage de température de 100 °C à 400 °C.

9. Module de batterie (10) selon l'une quelconque des revendications précédentes, dans lequel chacune des plaques d'extrémité (12) est constituée d'un matériau conducteur de chaleur avec une conductivité thermique supérieure à 100 Wm⁻¹K⁻¹, de préférence un alliage d'aluminium.

10. Module de batterie (10) selon l'une quelconque des revendications précédentes, dans lequel la ou les rangées de cellules (16) comportent au moins une première et une seconde rangée de cellules (16).

11. Module de batterie (10) selon la revendication 10, comprenant un espaceur d'isolation de plaque d'extrémité commun comprenant l'espaceur d'isolation d'extrémité (26) de la première rangée de cellules (16) et l'espaceur d'isolation d'extrémité (26) de la seconde rangée de cellules.

12. Module de batterie (10) selon l'une quelconque des revendications 10 à 11, dans lequel les première et seconde rangées de cellules (16) sont positionnées côte à côte sur des côtés opposés d'une plaque de séparation (18) qui s'étend de l'une des deux plaques d'extrémité (12) à l'autre.

13. Module de batterie (10) selon la revendication 12 en combinaison avec la revendication 11, dans lequel l'espaceur d'isolation de plaque d'extrémité (26) commun est pourvu d'une fente (28) à travers laquelle s'étend une languette (30) de la plaque de séparation (18).

14. Module de batterie (10) selon l'une quelconque des revendications 12 à 13, dans lequel
- la plaque de séparation (18) est constituée d'un alliage d'aluminium ayant une conductivité thermique supérieure à 100 Wm⁻¹K⁻¹, et/ou
- chacun des éléments de batterie prismatiques (20, 22) a une zone de contact avec la plaque de séparation (18), qui est inférieure à ¼ d'une zone de contact entre l'élément de batterie d'extrémité (22) et l'espaceur d'isolation d'extrémité (26).

15. Module de batterie (10) selon l'une quelconque des revendications précédentes, dans lequel l'au moins un des espaceurs d'isolation thermique (24, 26) constitué dudit matériau de transition d'état a une épaisseur supérieure à 0,7 mm et inférieure à 2,5 mm.
